# EUROPÄISCHE PATENTSCHRIFT

(11) **EP 3 259 515 B1**
(45) Veröffentlichungstag und Bekanntmachung des Hinweises auf die Patenterteilung: **25.03.2020**
(21) Anmeldenummer: 16703975.9
(22) Anmeldetag: 11.02.2016
(51) Int. Cl.: F16L 13/14

(54) **FITTING MIT BESCHICHTUNG, ROHRLEITUNGSSYSTEM UND VERWENDUNG DES FITTINGS ODER DES ROHRLEITUNGSSYSTEMS**
FITTING WITH A COATING, PIPELINE SYSTEM AND USE OF THE FITTING OR OF THE PIPELINE SYSTEM
RACCORD POURVU D'UN REVÊTEMENT, SYSTÈME DE TUYAUTERIE ET UTILISATION DU RACCORD OU DU SYSTÈME DE TUYAUTERIE

(30) Priorität: 20.02.2015 DE 102015102404
(43) Veröffentlichungstag der Anmeldung: 27.12.2017
(73) Patentinhaber: Viega GmbH & Co. KG, 57439 Attendorn (DE)
(72) Erfinder: RISCHEN, Christian, 59889 Eslohe (DE); FRANKE, Bernd, 57413 Finnentrop-Schönholthausen (DE); MASSOW, Peter, 57271 Hilchenbach (DE); OCHIBOWSKI, Manuel, 57462 Olpe (DE)
(74) Vertreter: Cohausz & Florack
(86) Internationale Anmeldenummer: PCT/EP2016/052901
(87) Internationale Veröffentlichungsnummer: WO 2016/131700

(56) Entgegenhaltungen:
- EP-A2- 2 586 708
- WO-A1-2014/000897
- US-A- 4 026 006
- US-A- 4 858 968
- US-A- 5 560 661

## Beschreibung

Die Erfindung betrifft ein Fitting für eine dichtende unlösbare Rohrverbindung, mit einem Fittinggrundkörper zur Aufnahme mindestens eines zu verbindenden Rohrs und mit mindestens einer Presshülse, wobei der Fittinggrundkörper und die Presshülse einander zugeordnete Pressflächen aufweisen, wobei der Fittinggrundkörper eine im fertig montierten Zustand dem zu verbindenden Rohr zugewandte und dem Randbereich des Fittinggrundkörpers zugeordnete Pressfläche hat und wobei die einander zugeordneten Pressflächen des Fittinggrundkörpers und der Presshülse derart gebildet sind, dass ein axiales Aufschieben der Presshülse auf den Fittinggrundkörper ein radiales Verengen des Randbereichs des Fittinggrundkörpers bewirkt, wobei die Pressfläche des Fittinggrundkörpers während des axialen Aufschiebens entlang der Pressfläche der Presshülse abgleitet und der Endbereich des Fittinggrundkörpers in radial nach innen gewandter Richtung umbördelt wird. Weiter betrifft die Erfindung ein Rohrleitungssystem mit einem solchen Fitting und die Verwendung eines erfindungsgemäßen Fittings oder Rohrleitungssystems in einer Heizungs-, Klima-, Sanitär oder Trinkwasserinstallation, oder einer Installation zum Transport technischer oder medizinischer Fluide.

Fittings der eingangs genannten Art werden üblicherweise in Rohrleitungssystemen eingesetzt, um Rohre metallisch dichtend und unlösbar miteinander zu verbinden. Ein gattungsgemäßes Fitting ist beispielsweise aus der WO 2014/000897 A1 bekannt. Gemäß der WO 2014/000897 A1 wird zum Herstellen einer metallisch dichtenden unlösbaren Rohrverbindung zunächst ein Rohrende des zu verbindenden Rohrs in eine Öffnung des Fittinggrundkörpers eingeführt, so dass der Fittinggrundkörper das Rohrende umfangsseitig umschließt. Die Presshülse wird mit Hilfe eines Presswerkzeugs auf den Fittinggrundkörper in axialer Richtung aufgeschoben, wobei die "axiale Richtung" entlang der Längserstreckung des Rohrendes und damit quer zum Rohrquerschnitt orientiert ist. Der Durchmesser der inneren Mantelfläche der Presshülse ist über der in axialer Richtung gemessenen Länge der Presshülse verjüngt ausgeführt, so dass beim axialen Aufschieben der Presshülse der Rand bzw. der Randbereich des Fittinggrundkörpers umgebördelt und in das zu verbindende Rohrende eingedrückt wird. Mit anderen Worten wird der Rand bzw. Randbereich des Fittinggrundkörpers in seinem Durchmesser radial verengt. Durch die an der Presshülse vorgesehene, vorzugsweise konisch zulaufende Mantelfläche wird daher ein axiales Aufschieben der Presshülse in eine radiale Verformung des Fittinggrundkörpers umgesetzt. Die "radiale Richtung" ist dabei quer zur Längserstreckung des anzubindenden Rohrendes und quer zur axialen Richtung orientiert. Auf diese Weise werden der Fittinggrundkörper und das Rohrende durch das axiale Aufschieben der Presshülse plastisch verformt und miteinander verpresst.

Versuche gemäß internationaler Normen für Kältetechnik, Gas- und Wasserinstallationen, Praxisprüfungen und Baustellensimulationen haben gezeigt, dass es bei den in WO 2014/000897 A1 beschriebenen Fittings, abhängig von den auftretenden Betriebslasten oder der Beschaffenheit der zu verbindenden Rohre, vereinzelt zu Undichtigkeiten kommen kann. So können beispielsweise Biege- oder Torsionsbelastungen oder auch Oberflächenbeschädigungen (z.B. Riefen) an den zu verbindenden Rohren eine unzureichende Dichtigkeit im Bereich der Rohrverbindung zur Folge haben.

Um Pressfittings robuster gegenüber Biege- oder Torsionsbeanspruchungen zu gestalten, ist es bekannt, diese Verbindungen zusätzlich mechanisch zur sichern. Weiter ist es bekannt, Fehlstellen im Bereich der Oberflächen der anzubindenden Rohrenden mit Klebstoffen auszugleichen und das Rohr so abzudichten. Beide Varianten erhöhen jedoch die Materialkosten der Rohrverbindung und machen zudem die Montage des Fittings aufwändiger.

Fittings mit einer Beschichtung aus einem weichen Metall sind aus der US 5 560 661 A bekannt, wobei die Dicke der metallischen Schicht 2.5 µm oder weniger beträgt. Die Beschichtung soll die Dichtheit der Rohrverbindung erhöhen.

Der vorliegenden Erfindung liegt vor diesem Hintergrund das technische Problem zugrunde, einen Fitting und ein Rohrleitungssystem der eingangs genannten Art sowie eine Verwendung derselben anzugeben, welche die zuvor genannten Nachteile nicht oder zumindest in geringerem Maße aufweisen, und insbesondere die Installation vereinfachen.

Dieses technische Problem wird erfindungsgemäß durch ein Fitting nach Anspruch 1, ein mit einem solchen Fitting versehenes Rohrleitungssystem nach Anspruch 10 und die Verwendung des Fittings und des Rohrleitungssystems gemäß Anspruch 12 gelöst.

Der Begriff "weicher" bedeutet in dem vorliegenden Text, dass der jeweils weichere Werkstoff im Vergleich zu einem anderen Werkstoff eine geringere Härte aufweist.

Der Erfindung liegt die Erkenntnis zugrunde, dass eine Beschichtung wenigstens einer der Pressflächen mit einem im Vergleich zur Presshülse und/oder dem Fittinggrundkörper weicheren Werkstoff die zwischen Presshülse und Fittinggrundkörper und/oder zwischen Fittinggrundkörper und zu verbindendem Rohr auftretende Gleitreibung während des Verpressens herabsetzt. Die Beschichtung bewirkt beim Verpressen von Fitting und Rohr einen Schmiereffekt. Durch den Schmiereffekt der Beschichtung werden die zur radialen Verformung von Fittinggrundkörper und zu verbindendem Rohr insgesamt erforderlichen axialen Fügekräfte während des Pressvorgangs reduziert. Der Fittinggrundkörper wird aufgrund der reduzierten axialen Fügekräfte in axialer Richtung weniger gestaucht. Die reduzierte Stauchung bewirkt eine planere, vergrößerte Anlagefläche zwischen dem Fittinggrundkörper und dem zu verbindenden Rohr, so dass die Dichtigkeit der Rohrverbindung insgesamt verbessert wird. Je nach Beschichtungswerkstoff dient die Beschichtung zudem als Korrosionsschutz im Bereich der beschichteten Pressfläche. Zudem kann sich aus dem Schichtwerkstoff durch das Fügen oder Betriebslasten zwischen dem Fittinggrundkörper und dem zu verbindenden Rohr einen Pfropfen bilden, der die Verbindungsstelle zusätzlich abdichtet.

Die Beschichtung kann erfindungsgemäß zwischen den einander zugeordneten Pressflächen von Presshülse und Fittinggrundkörper vorgesehen sein. Alternativ oder ergänzend kann die Beschichtung erfindungsgemäß an der im fertig montierten Zustand dem zu verbindenden Rohr zugeordneten Pressfläche des Fittinggrundkörpers vorgesehen sein.

Ist die Beschichtung an der im fertig montierten Zustand dem zu verbindenden Rohr zugeordneten Pressfläche des Fittinggrundkörpers vorgesehen, kann das Material des Schichtwerkstoffs ggf. vorhandene Oberflächenbeschädigungen an dem dem Fittinggrundkörper zugeordneten Endabschnitt des Rohrs ausgleichen, indem beispielsweise Unebenheiten, Riefen, Abplatzungen oder sonstige Fehlstellen der Rohroberfläche während des Verpressen mit dem Schichtmaterial ausgefüllt und damit abgedichtet werden. Nach einer bevorzugten Ausgestaltung des Fittings ist der Schichtwerkstoff weicher als der Werkstoff des zu verbindenden Rohrs.

Fitting und Presshülse sind bevorzugt im Wesentlichen rotationssymmetrisch ausgebildet und insbesondere zum Verbinden von Rohren mit kreisrundem Querschnitt vorgesehen. Neben mindestens einem zylindrischen Abschnitt ist auch mindestens ein Abschnitt mit veränderlichem Durchmesser, insbesondere ein konischer Abschnitt vorgesehen.

Somit steht ein Fitting zur Verfügung, bei dem durch die reduzierten erforderlichen Fügekräfte die Montage des Fittings erleichtert wird. Zudem wird durch die geringere Stauchung des Fittinggrundkörpers und die gegebenenfalls beim Verpressen abgedichteten Oberflächendefekte des zu verbindenden Rohrs die für die Dichtigkeit entscheidende Anlage zwischen dem Fittinggrundkörper und dem zu verbindenden Rohr verbessert. Das erfindungsgemäße Fitting ermöglicht daher in einfacher und kostengünstiger Weise die Herstellung einer robusten dichtenden Rohrverbindung.

Die Beschichtung kann dabei aus einem weichen Metall oder einer weichen Metalllegierung gebildet sein. Die Beschichtung kann beispielsweise aus mindestens einem der Metalle Zinn, Zink, Wismut, Blei, Cadmium, Antimon, Aluminium, Kupfer, Indium oder deren Legierungen bestehen. Gemäß einer weiteren Ausgestaltung ist wenigstens eine der Pressflächen verzinnt.

Ein solcher Fitting mit einer Beschichtung aus weichem Metall oder einer weichen Metalllegierung kann in einem Rohrleitungssystem als metallisch dichtender Verbinder eingesetzt werden, wobei metallisch dichtende Verbinder auch hohen Anforderungen an die Dichtigkeit gerecht werden, wie z.B. im Bereich der Klima- und Kältetechnik oder auch der Medizintechnik häufig gefordert werden. So eignet sich ein solcher Fitting beispielsweise für Installationen zum Transport medizinischer Fluide, insbesondere medizinischer Gase, oder für Installationen zum Transport von Kältemitteln. Zudem sind metallische Verbindungen robust gegenüber Temperaturschwankungen und auch für hohe Drücke geeignet.

Die Presshülse und/oder der Fittinggrundkörper und/oder das zu verbindende Rohr können beispielsweise aus einem Stahl-, insbesondere Edelstahl-, oder Kupferwerkstoff, insbesondere Messing, Rotguss, Siliziumbronze oder Aluminium bzw. Aluminiumlegierungen gebildet sein, wobei der jeweilige Werkstoff eine höhere Härte hat, als der Werkstoff der Beschichtung. Als Materialien für das zu verbindende Rohr kommen zusätzlich Mehrschichtverbundrohre aus Edelstahl/Kunststoff oder Kupfer/Kunststoff und auch noch Faserverbundwerkstoffe in Frage. Die Härte der Werkstoffe ist dabei durch die bekannten Verfahren zur Härtemessung metallischer Werkstoffe bestimmt, wie z.B. die Härte nach Brinell, Vickers oder Rockwell.

Eine besonders wirtschaftliche Herstellung des Fittings ist dann möglich, wenn die Beschichtung galvanisch aufgebracht ist. So kann eine der Pressflächen beispielsweise eine galvanisch aufgebrachte Verzinnung aufweisen. Die Beschichtung kann in weiteren Ausgestaltungen grundsätzlich in beliebiger Weise aufgebracht werden. So kann, abhängig vom Werkstoff des Substrats und dem Werkstoff der aufzubringenden Beschichtung, auf bekannte Beschichtungsverfahren wie z.B. Schmelztauchen oder Pulverbeschichten zurückgegriffen werden.

Die nachfolgenden Verfahren können wahlweise bei der Beschichtung der Bauteile angewendet werden. Als Verfahren in der Gasphase können chemische Gasphasenabscheidung (auch CVD genannt), physikalische Gasphasenabscheidung (auch PVD genannt) oder Sputtern mittels Kathodenzerstäubung genannt werden. Verfahren in flüssiger Phase sind beispielsweise Lackieren, thermisches Spritzen, Schmelztauchen oder Sprühbeschichtung sowie unter Anwendung von Lösungen wie beispielsweise Galvanisieren oder chemisches Verzinnen. Als Verfahren unter Anwendung von festen Materialien können thermisches Spritzen, Pulverbeschichten, Auftraglöten, Plasma-Pulver-Auftragschweißen, Auftragschweißen, Wirbelsintern oder mechanisches Plattieren genannt werden.

Die Beschichtung kann weiterhin aus einem organischen Dichtstoff gebildet sein. Je nach Anforderung an die Rohrverbindung stellen organische Dichtstoffe eine kostengünstige Alternative zu den zuvor beschriebenen metallischen Beschichtungen dar. So kann die Beschichtung beispielsweise Silikone, Polyurethane, Polytetrafluorethylen (PTFE) oder Polysulfide enthalten, die durch Spritzen, Tauchen, Aufpinseln, Aufrakeln oder Aufpressen aufgetragen werden können. Die Härte der verwendeten Werkstoffe ist dabei durch die bekannten Verfahren zur Härtemessung metallischer bzw. organischer Werkstoffe bestimmt, wie z.B. die Härte nach Brinell, Vickers, Rockwell oder, im Falle der organischen Dichtstoffe, die Härte nach Shore oder IRHD (International Rubber Hardness Degree-Härteprüfverfahren).

Des Weiteren weist die Beschichtung, insbesondere eine metallische Beschichtung, eine Schichtdicke in einem Bereich von 4 µm bis 10 µm, weiter bevorzugt 4 bis 7 µm auf. Praktische Versuche haben gezeigt, dass sich der vorteilhafte Schmier- und/oder Dichteffekt der Beschichtung bereits für diese vergleichsweise geringen Schichtdicken einstellt, insbesondere bei einer aus einem weichen Metall gebildeten Beschichtung. Die Schichtdicken bei Kunststoffen liegen bevorzugt im Bereich von 1 bis 200 µm.

Die Presshülse und/oder der Fittinggrundkörper können lediglich in einem lokal auf die jeweilige Pressfläche beschränkten Bereich beschichtet sein. So kann während des Beschichtens beispielsweise nur der zu beschichtende Bereich des Fittings mit dem Schichtwerkstoff in Kontakt gebracht oder ein Teil der zu beschichtenden Komponente durch Maskieren von der Beschichtung ausgenommen werden. Ein nur teilweises Beschichten kann erforderlich sein, wenn etwaige an den beschichteten Bereich angrenzende Funktionsflächen frei von Schichtwerkstoff bleiben sollen. Des Weiteren können der Fittinggrundkörper und/oder die Presshülse vollständig beschichtet sein. Auf diese Weise lässt sich die Beschichtung besonders effizient und kostengünstig herstellen.

Insbesondere für den Fall, dass der Fittinggrundkörper vollständig beschichtet ist, ergibt sich der Vorteil, dass sowohl die im fertig montierten Zustand dem anzubindenden Rohr zugeordnete Pressfläche als auch die der Presshülse zugeordnete Pressfläche des Fittinggrundkörpers beschichtet sind. Damit wird während des Verpressens des Fittings die Reibung zwischen zu verbindendem Rohr und Fittinggrundkörper einerseits und der Presshülse und dem Fittinggrundkörper andererseits reduziert.

Nach einer weiteren Ausgestaltung des Fittings ist der Durchmesser der Presshülse im Bereich ihrer Pressfläche über der in axialer Richtung gemessenen Länge der Presshülse verjüngt ausgeführt. Die Breite ist dabei die in axialer Richtung gemessene Breite der Presshülse. Die Pressfläche der Presshülse ist zum Umsetzen einer axialen Bewegung der Presshülse in eine radiale Verengung des Fittinggrundkörpers folglich zumindest abschnittsweise quer zur axialen Richtung orientiert. So kann durch die Gestaltung des über ihrer Breite verjüngten Durchmessers der Presshülse der Grad der Verformung von Fittinggrundkörper und zu verbindendem Rohr eingestellt werden. Die Presshülse kann insbesondere ein konisch, rund oder bauchig verjüngtes Innenprofil aufweisen.

So kann die Presshülse beispielsweise einen Aufnahmebereich haben, der im Wesentlichen dem Außendurchmesser des Fittinggrundkörpers entspricht, so dass der Fittinggrundkörper mit Spiel in den Aufnahmebereich eingeführt werden kann. Ausgehend von diesem Durchmesser geht der Aufnahmebereich in die Pressfläche über. Im Bereich der Pressfläche ist die Presshülse auf einen Innendurchmesser verjüngt, der geringer ist, als der Außendurchmesser des Fittinggrundkörpers im unverformten Zustand. Der Übergang des Aufnahmebereichs zur Pressfläche der Presshülse kann insbesondere sprungfrei gebildet sein, so dass der Aufnahmebereich im Wesentlichen tangenten- oder krümmungsstetig in die Pressfläche übergeht, um einen möglichst ruckfreien Pressvorgang zu ermöglichen. Tangenten- bzw. Krümmungsstetigkeit bedeutet dabei, dass die Steigungen von Tangenten benachbarter Flächenelemente keine Sprünge aufweisen. Durch die Tangenten- bzw. Krümmungsstetigkeit wird somit sichergestellt, dass keine oder nur abgerundete Grate oder Kanten im Bereich zwischen Aufnahmebereich und Pressfläche vorhanden sind.

Gemäß weiteren Ausgestaltungen des Fittings ist es ebenfalls möglich, eine entsprechende Schrägfläche bzw. gekrümmte Fläche zum Umsetzen einer axialen Schiebebewegung zwischen Presshülse und Fittinggrundkörper in ein radiales Verengen des Durchmessers des Fittinggrundkörpers an dem Fittinggrundkörper selbst vorzusehen.

Die Erfindung betrifft weiter ein Rohrleitungssystem, mit mindestens einem erfindungsgemäßen Fitting und mit mindestens einem mit dem Fitting zu verbindendem Rohr.

Nach einer Ausgestaltung des Rohrleitungssystems kann die Beschichtung an der dem Rohr zugeordneten Pressfläche vorgesehen sein, wobei die Beschichtung aus einem im Vergleich zum Rohrwerkstoff weicheren Werkstoff gebildet sein kann. Der Schichtwerkstoff ist in diesem Fall besonderes gut dazu geeignet, Oberflächendefekte wie Unebenheiten, Riefen, Abplatzungen oder sonstige Fehlstellen der Rohroberfläche auszugleichen und diese während des Verpressens von Fitting und Rohr auszufüllen und abzudichten. Das Rohrleitungssystem ist dadurch bei der Installation beschädigter bzw. nicht optimal vorbereiteter Rohre robust gegenüber Undichtigkeiten, die aus den vorgenannten Oberflächendefekten resultieren.

Das zuvor beschriebene Fitting und das Rohrleitungssystem sind aufgrund der robusten und kostengünstigen Gestaltung besonders geeignet für eine Verwendung in einer Heizungs-, Klima-, Sanitär oder Trinkwasserinstallation, oder einer Installation zum Transport technischer oder medizinischer Fluide.

Nachfolgend wird die Erfindung anhand von Ausführungsbeispielen näher erläutert. In der Zeichnung zeigen:
- Fig. 1: ein erfindungsgemäßes Fitting mit zwei zu verbindenden Rohrenden in einer perspektivischen Ansicht,
- Fig. 2: das Fitting aus Fig. 1 in einem Querschnitt vor dem Verpressen,
- Fig. 3: das Fitting aus Fig. 1 in einem Querschnitt nach dem Verpressen,
- Fig. 4a-d: verschiedene Ausführungen eines Innenprofils einer erfindungsgemäßen Presshülse,
- Fig. 5a: ein unbeschichtetes Fitting mit einem Rohr nach dem Verpressen,
- Fig. 5b: ein erfindungsgemäßes, beschichtetes Fitting mit einem Rohr nach dem Verpressen,
- Fig. 5c: ein weiteres erfindungsgemäßes, beschichtetes Fitting mit einem Rohr nach dem Verpressen.

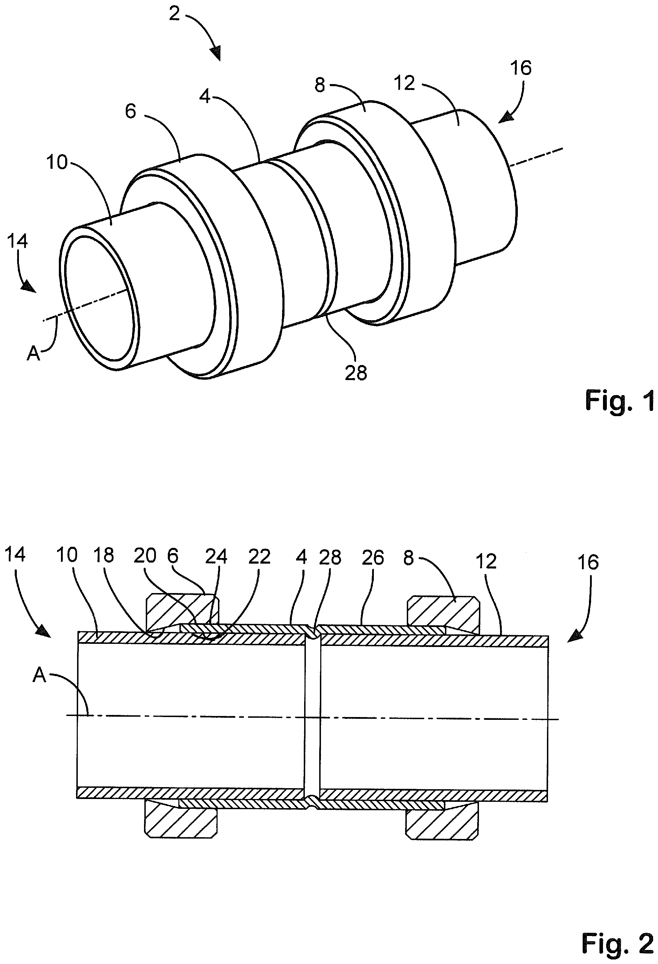

Fig. 1 zeigt ein erfindungsgemäßes Fitting 2 für eine dichtende, unlösbare Rohrverbindung in einer perspektivischen Ansicht. Das Fitting 2 hat einen Fittinggrundkörper 4 und zwei Presshülsen 6, 8. In dem Fittinggrundkörper 4 sind zwei Rohrenden 10, 12 zweier zu verbindender Rohre 14, 16 aufgenommen. Der Fittinggrundkörper 4 und die Presshülsen 6, 8 sind im Wesentlichen zylinderförmig gestaltet. Der Fittinggrundkörper 4, die Presshülsen 6, 8 und die Rohrenden 10, 12 sind koaxial zur Achse A angeordnet. Das Fitting 2 ist symmetrisch aufgebaut, so dass nachfolgend exemplarisch die Rohrverbindung mit Bezug zur Presshülse 6 und dem Rohrende 10 beschrieben wird, wobei diese Ausführungen gleichermaßen für das gegenüberliegend angeordnete Rohrende 12 und der diesem Rohrende 12 zugeordneten Presshülse 8 gelten.

Fig. 2 zeigt das Fitting aus Fig. 1 in einem Querschnitt vor dem Verpressen. Der Fittinggrundkörper 4 und die Presshülse 6 weisen einander zugeordnete Pressflächen 18, 20 auf, die während des Verpressens aufeinander abgleiten. Der Fittinggrundkörper 4 hat zudem eine dem Randbereich des Fittinggrundkörpers 4 zugeordnete Pressfläche 22, die in dem hier dargestellten montierten Zustand des Fittings 2 dem zu verbindenden Rohr 14 zugewandt ist. Die Presshülse 6 ist zum radialen Verengen des Fittinggrundkörpers 4 in axialer Richtung entlang der Achse A auf den Fittinggrundkörper 4 aufschiebbar.

In der hier dargestellten vormontierten Position sitzt der Fittinggrundkörper 4 endseitig in einem Aufnahmeabschnitt 24 der Presshülse 6. Ausgehend von dem Aufnahmeabschnitt 24 ist die Presshülse 6 im Bereich ihrer Pressfläche 18 über der in axialer Richtung gemessenen Breite verjüngt ausgeführt. Ausgehend von dem im Wesentlichen dem Außendurchmesser des Fittinggrundkörpers 4 entsprechenden Durchmesser des Aufnahmeabschnitts 24 läuft die Pressfläche 18 der Presshülse 6 konisch zu, so dass der Durchmesser der Presshülse 6 im Wesentlichen auf den Außendurchmesser des Rohrendes 10 verjüngt ist. Es versteht sich, dass zwischen dem Aufnahmeabschnitt 24 und dem Fittinggrundkörper 4 sowie zwischen dem Rohrende 10 und der konisch zulaufenden Pressfläche 18 ein Montagespiel vorgesehen ist.

Das Rohr 14, der Fittinggrundkörper 4 und die Presshülse 6 sind beispielsweise aus einem Kupferwerkstoff oder Stahl/Edelstahl hergestellt. Der Fittinggrundkörper 4 ist mit einer Beschichtung 26 versehen. Bei der Beschichtung 26 handelt es sich um eine galvanisch aufgebrachte Verzinnung. Die Schichtdicke der Beschichtung 26 beträgt etwa 5 µm. Der Fittinggrundkörper 4 ist vollständig beschichtet. In Fig. 2 ist dieser Schichtwerkstoff wegen der geringen relativen Dicke nicht separat dargestellt.

Beim Verpressen des Fittings 2 mit dem Rohrende 10 wird die Presshülse 6 in axialer Richtung auf den Fittinggrundkörper 4 aufgeschoben. Dazu wird ein hier nicht dargestelltes, beispielsweise aus WO 2014/000897 A1 bekanntes Presswerkzeug verwendet. Die Pressfläche 20 des Fittinggrundkörpers 4 gleitet während des axialen Verschiebens entlang der Pressfläche 18 der Presshülse 6 ab. Dabei wird der Endbereich des Fittinggrundkörpers 4 in radial nach innen gewandter Richtung umgebördelt. Mit anderen Worten bildet die Presshülse 6 eine Matrize, wobei sich die Pressfläche 20 des Fittinggrundkörpers während des Pressvorgangs an die konisch zulaufende Pressfläche 18 der Presshülse 6 anschmiegt, so dass der Endbereich des Fittinggrundkörpers 4 entlang der Innenkontur der Presshülse 6 abgleitet und dadurch plastisch verformt wird. Die Form der Presshülse 6 bleibt im Wesentlichen unverändert.

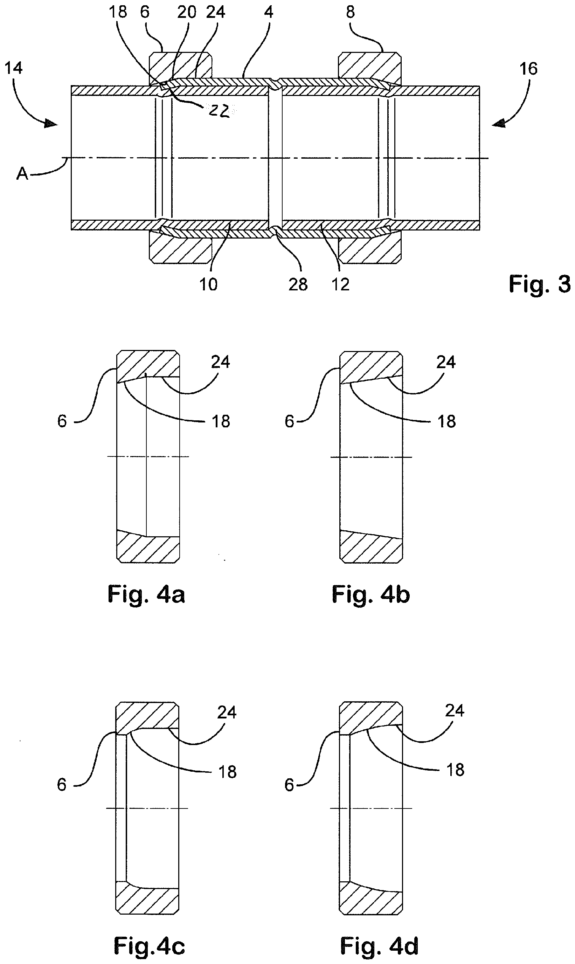

In Fig. 3 ist das Fitting 2 aus Fig. 1 in einem Querschnitt nach dem Verpressen dargestellt. Das Rohr 14 ist im Bereich des verformten Endbereichs des Fittinggrundkörpers 4 ebenfalls deformiert und über die Presshülse 6 mit dem Fittinggrundkörper 4 verspannt. Die einander zugewandten Stirnseiten der Endabschnitte 10, 12 der Rohre 14, 16 sind innerhalb des Fittinggrundkörpers durch einen Anschlag 28 voneinander beanstandet angeordnet. Der Endabschnitt 12 des Rohrs 16 ist in zum Endabschnitt 10 des Rohrs 14 analoger Weise verpresst.

In Fig. 4 sind mehrere Möglichkeiten dargestellt, dass verjüngte Innenprofil der Presshülsen 6, 8 zu gestalten.

In Fig. 4a weist das Profil der im Querschnitt dargestellten Presshülse 6 einen zylindrischen Aufnahmeabschnitt 24 auf. Ausgehend von dem Aufnahmeabschnitt 24 ist das Profil konisch verjüngt.

Die Figuren 4b bis 4d zeigen jeweils Profilformen, bei denen der Aufnahmeabschnitt 24 sprungfrei in die jeweilige Pressfläche 18 übergeht. Einerseits kann durch diese Profilformen im Bereich des (fließenden) Übergangs vom Aufnahmeabschnitt 24 zur Pressfläche 18 durch die in diesem Bereich vorgesehene flache Steigung eine Vormontage der Presshülse 6 auf dem Fittinggrundkörper 4 erfolgen, wobei die Presshülse 6 selbsthemmend auf dem Fittinggrundkörper 4 gehalten wird. Zudem wird zu Beginn des Pressvorgangs, ausgehend von dieser Vormontagestellung, das Aufschieben der Presshülse 6 durch den sprungfreien Übergang erleichtert.

Fig. 4b zeigt eine Innenkontur bzw. einen Innenprofil mit einem insgesamt konischen Verlauf mit gleicher Steigung. Aufnahmeabschnitt 24 und Pressfläche 18 gehen fließend ineinander über. In Fig. 4c geht ein zylindrisch geformter Aufnahmeabschnitt 24 in eine bauchig verjüngte Pressfläche 18 über. Fig. 4d zeigt schließlich eine Presshülse 6, mit einer im Bereich des Aufnahmeabschnitts 24 und der Pressfläche 18 kontinuierlich gekrümmten Innenkontur.

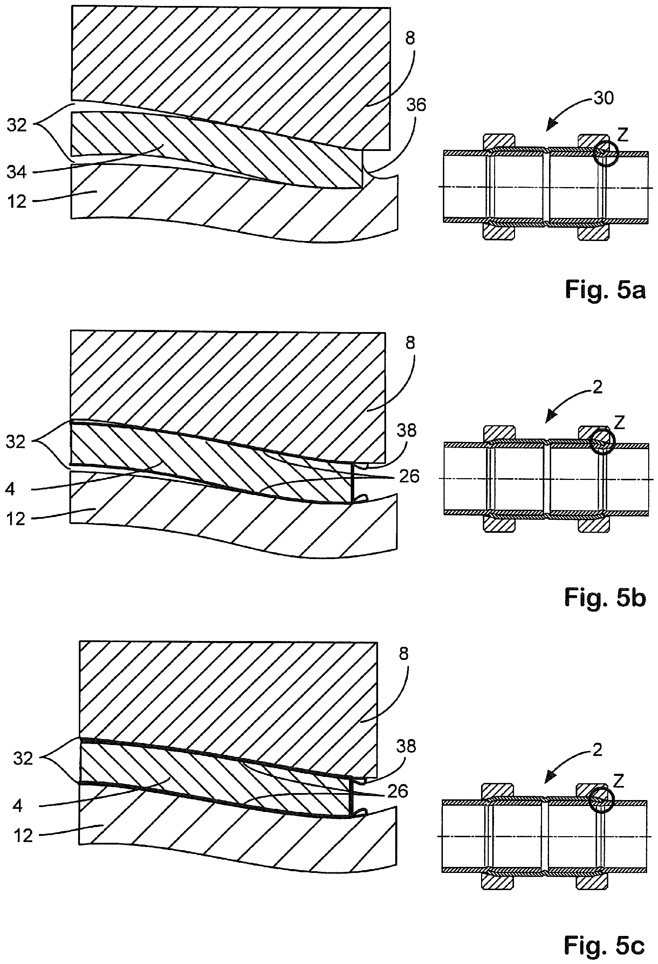

Anhand der Fig. 5 wird nachfolgend der Effekt der Beschichtung 26 auf die Rohrverbindung dargestellt. Insbesondere zeigen die einzelnen Fig. 5a bis 5c jeweils Ausschnittvergrößerungen von Rohrverbindungen in einem Querschnitt, wobei diese Figuren schematisch Versuchsergebnisse von getesteten Rohrverbindungen widerspiegeln. Die dargestellten Rohrverbindungen sind nach dem Verpressen des Fittings 2, 30 auf Torsion belastet worden. Es wird jeweils eine Vergrößerung des Bereichs "Z" der Rohrverbindung dargestellt.

Fig. 5a zeigt eine unlösbare, dichtende Rohrverbindung, die mit einem unbeschichteten Fitting 30 entsprechend dem Stand der Technik hergestellt worden ist. Wie aus der vergrößerten Darstellung erkennbar, sind durch den Fügevorgang die Spalte 32 zwischen der Presshülse 8 dem Fittinggrundkörper 34 und dem zu verbindenden Rohrende 12 entstanden. Zudem ist durch die Torsionsbelastung und/oder den Pressvorgang ein Grat 36 entstanden, den der Fittinggrundkörper 34 an dem zu verbindenden Rohrende 12 aufgeschoben hat.

Fig. 5b zeigt eine unlösbare, dichtende Rohrverbindung, die mit einem erfindungsgemäßen Fitting 2 hergestellt worden ist. Der Fittinggrundkörper 4 ist mit einer Schichtdicke von etwa 5 µm verzinnt. Durch den Schmiereffekt der Beschichtung 26 sind die Spalte 32 zwischen den verpressten Komponenten Presshülse 8, Fittinggrundkörper 4 und Rohrende 12 im Vergleich zum zuvor dargestellten unbeschichteten Zustand deutlich reduziert. Zudem ist kein Grat zwischen dem Fittinggrundkörper 4 und dem Rohrende 12 in Folge der Torsionsbelastung aufgeschoben worden. Im Vergleich zur unbeschichteten Variante besteht eine weitaus planere und insgesamt vergrößerte Anlage zwischen den verpressten Komponenten, insbesondere zwischen dem Fittinggrundkörper 4 und dem Rohrende 12.

Fig. 5c zeigt ebenfalls eine unlösbare, dichtende Rohrverbindung die mit einem erfindungsgemäßen Fitting 2 hergestellt worden ist. Der Fittinggrundkörper 4 ist mit einer Schichtdicke von 10 µm verzinnt. Wiederum zeigt sich, dass eine im Vergleich zum unbeschichteten Fitting 30 weitaus planare und insgesamt vergrößerte Anlage zwischen den verpressten Komponenten besteht. Mit im Vergleich zu Fig. 5b größerer Schichtdicke der Verzinnung konnten die Spalte 32 zwischen der Presshülse 8, dem Fittinggrundkörper 4 und dem Rohrende 12 weiter reduziert werden.

Zwischen der Presshülse 8 und dem Fittinggrundkörper 4 und/oder dem Fittinggrundkörper 6 und dem Rohrende 12 können sich durch den Montagevorgang oder die Betriebslasten Zinnpfropfen 38 bilden, die die Verbindung zusätzlich abdichten.

## Patentansprüche

1. Fitting für eine dichtende unlösbare Rohrverbindung,
- mit einem Fittinggrundkörper (4) zur Aufnahme mindestens eines zu verbindenden Rohrs (14, 16) und
- mit mindestens einer Presshülse (6, 8),
- wobei der Fittinggrundkörper (4) und die Presshülse (6, 8) einander zugeordnete Pressflächen (18, 20) aufweisen,
- wobei der Fittinggrundkörper (4) eine im fertig montierten Zustand dem zu verbindenden Rohr (14, 16) zugewandte und dem Randbereich des Fittinggrundkörpers (4) zugeordnete Pressfläche (22) hat und
- wobei die einander zugeordneten Pressflächen (18, 20) des Fittinggrundkörpers (4) und der Presshülse (6, 8) derart gebildet sind, dass ein axiales Aufschieben der Presshülse (6,8) auf den Fittinggrundkörper (4) ein radiales Verengen des Randbereichs des Fittinggrundkörpers (4) bewirkt, wobei die Pressfläche (20) des Fittinggrundkörpers (4) während des axialen Aufschiebens entlang der Pressfläche (18) der Presshülse (6) abgleitet und der Endbereich des Fittinggrundkörpers (4) in radial nach innen gewandter Richtung umgebördelt wird,
wobei an mindestens einer der Pressflächen (18, 20, 22) eine Beschichtung (26) vorgesehen ist,
wobei die Beschichtung (26) aus einem im Vergleich zur Presshülse (6, 8) und/oder dem Fittinggrundkörper (4) weicheren Werkstoff besteht und wobei die Beschichtung (26) eine Schichtdicke in einem Bereich von 4 µm bis 10 µm aufweist.

2. Fitting nach Anspruch 1,
**dadurch gekennzeichnet,**
**dass** die Beschichtung (26) aus einem weichen Metall oder einer weichen Metalllegierung gebildet ist.

3. Fitting nach Anspruch 1 oder Anspruch 2,
**dadurch gekennzeichnet,**
**dass** wenigstens eine der Pressflächen (18, 20, 22) verzinnt ist.

4. Fitting nach einem der Ansprüche 1 bis 3,
**dadurch gekennzeichnet,**
**dass** die Beschichtung (26) durch Galvanisieren, Schmelztauchen oder Pulverbeschichten aufgebracht ist.

5. Fitting nach Anspruch 1
**dadurch gekennzeichnet,**
**dass** die Beschichtung (26) aus einem organischen Dichtstoff gebildet ist.

6. Fitting nach einem der Ansprüche 1 bis 5,
**dadurch gekennzeichnet,**
**dass** die Beschichtung (26) eine Schichtdicke in einem Bereich von 4 bis 7 µm aufweist.

7. Fitting nach einem der Ansprüche 1 bis 6,
**dadurch gekennzeichnet,**
**dass** der Fittinggrundkörper (4) und/oder die Presshülse (6, 8) vollständig beschichtet sind.

8. Fitting nach einem der Ansprüche 1 bis 7,
**dadurch gekennzeichnet,**
**dass** der Durchmesser der Presshülse (6, 8) zumindest im Bereich ihrer Pressfläche (18) über der in axialer Richtung gemessenen Länge der Presshülse verjüngt ausgeführt ist, wobei die Presshülse (6, 8) ein insbesondere konisch, rund oder bauchig verjüngtes Innenprofil aufweist.

9. Fitting nach einem der Ansprüche 1 bis 8,
**dadurch gekennzeichnet,**
**dass** das Innenprofil der Presshülse (6, 8) sprungfrei, insbesondere tangenten-oder krümmungsstetig gebildet ist.

10. Rohrleitungssystem,
- mit mindestens einem Fitting (2) nach einem der Ansprüche 1 - 9 und
- mit wenigstens einem mit dem Fitting zu verbindendem Rohr (14, 16).

11. Rohrleitungssystem nach Anspruch 10,
**dadurch gekennzeichnet,**
- **dass** die Beschichtung (26) an der dem Rohr (14, 16) zugeordneten Pressfläche (22) vorgesehen ist,
- wobei die Beschichtung (26) aus einem im Vergleich zum Rohrwerkstoff weicheren Werkstoff gebildet ist.

12. Verwendung eines Fittings nach einem der Ansprüche 1 bis 9 oder eines Rohrleitungssystems gemäß einem der Ansprüche 10 oder 11, in einer Heizungs-, Klima-, Sanitär oder Trinkwasserinstallation, oder in einer Installation zum Transport technischer oder medizinischer Fluide.

## Claims

1. Fitting for a sealing, non-releasable pipe connection,
- having a main fitting body (4) for accommodating at least one pipe (14, 16) which is to be connected, and
- having at least one pressing sleeve (6, 8),
- wherein the main fitting body (4) and the pressing sleeve (6, 8) have pressing surfaces (18, 20) which are assigned to one another,
- wherein the main fitting body (4) has a pressing surface (22) which, in the installed state, is directed towards the pipe (14, 16) which is to be connected and is assigned to the peripheral region of the main fitting body (4), and
- wherein the pressing surfaces (18, 20) assigned to one another on the main fitting body (4) and on the pressing sleeve (6, 8) are formed such that the act of pushing the pressing sleeve (6, 8) axially onto the main fitting body (4) gives rise to the peripheral region of the main fitting body (4) being narrowed radially, wherein the pressing surface (20) of the main fitting body (4) slides along the pressing surface (18) of the pressing sleeve (8) during axial push on and the end area of the main fitting body (4) is flanged in a direction radially inwards,
- wherein a coating (26) is provided on at least one of the pressing surfaces (18, 20, 22),
- wherein the coating (26) consists of a material which is softer than that of the pressing sleeve (6, 8) and/or of the main fitting body (4) and
- wherein the coating has a thickness comprised in a range from 4 µm to 10 µm.

2. Fitting according to Claim 1, **characterised in that** the coating (26) is formed from a soft metal or from a soft metal alloy.

3. Fitting according to Claim 1 or 2, **characterised in that** at least one of the pressing surfaces (18, 20, 22) is tin-plated.

4. Fitting according to any one of Claims 1 to 3, **characterised in that** the coating (26) is applied by electroplating, hot dipping or powder coating.

5. Fitting according to Claim 1, **characterised in that** the coating (26) is formed from an organic sealant.

6. Fitting according to any one of Claims 1 to 5, **characterised in that** the coating (26) has a layer thickness in a range from 4 to 7 µm.

7. Fitting according to any one of Claims 1 to 6, **characterised in that** the main fitting body (4) and/or the pressing sleeve (6, 8) are fully coated.

8. Fitting according to any one of Claims 1 to 7, **characterised in that** the diameter of the pressing sleeve (6, 8), at least in the area of its pressing surface (18), is tapered over the length of the pressing sleeve measured in the axial direction, wherein the pressing sleeve (6, 8) has an inner profile which is tapered in particular in a conical, round or bellied manner.

9. Fitting according to any one of Claims 1 to 8, **characterised in that** the inner profile of the pressing sleeve (6, 8) is formed without discontinuity, in particular tangentially continuous or curvature continuous.

10. Pipeline system,
- having at least one fitting (2) according to any one of Claims 1 to 9 and
- having at least one pipe (14, 16) to be connected to the fitting.

11. Pipeline system according to Claim 10, **characterised in that**
- the coating (26) is provided on the pressing surface (22) assigned to the pipe (14, 16),
- wherein the coating (26) is formed from a softer material compared to the pipe material.

12. Use of a fitting according to any one of Claims 1 to 9 or of a pipeline system according to Claim 10 or 11in a heating installation, air-conditioning installation, sanitary installation or drinking water installation or in an installation for conveying technical or medical fluids.

## Revendications

1. Raccord pour un assemblage de tuyaux réalisé de manière non détachable et étanche,
- comprenant un corps de base de raccord (4) servant au logement au moins d'un tuyau (14, 16) à assembler et
- comprenant au moins un manchon de serrage (6, 8),
- où le corps de base (4) du raccord et le manchon de serrage (6, 8) présentent des surfaces de serrage (18, 20) associées l'une à l'autre,
- où le corps de base (4) du raccord, quand il est à l'état définitivement monté, a une surface de serrage (22) tournée vers le tuyau (14, 16) à assembler et associée à la zone de bordure du corps de base (4) du raccord, et
- où les surfaces de serrage (18, 20) - associées l'une à l'autre - du corps de base (4) du raccord et du manchon de serrage (6, 8) sont formées de manière telle, qu'un coulissement axial du manchon de serrage (6, 8), sur le corps de base (4) du raccord, provoque un rétrécissement radial de la zone de bordure du corps de base (4) du raccord, où la surface de serrage (20) du corps de base (4) du raccord, pendant le coulissement axial, est déplacée le long de la surface de serrage (18) du manchon de serrage (6), et la zone d'extrémité du corps de base (4) du raccord est rabattue suivant une direction tournée vers l'intérieur dans le sens radial, où il est prévu un revêtement (26) sur au moins l'une des surfaces de serrage (18, 20, 22), où le revêtement (26) se compose d'un matériau plus souple par comparaison avec celui du manchon de serrage (6, 8) et/ou avec celui du corps de base (4) du raccord, où le revêtement (26) présente une épaisseur de couche se situant dans une plage comprise entre 4 µm et 10 µm.

2. Raccord selon la revendication 1,
**caractérisé**
**en ce que** le revêtement (26) est formé en se composant d'un métal souple ou bien d'un alliage de métaux souples.

3. Raccord selon la revendication 1 ou la revendication 2,
**caractérisé**
**en ce qu'**au moins l'une des surfaces de serrage (18, 20, 22) est étamée.

4. Raccord selon l'une quelconque des revendications 1 à 3,
**caractérisé**
**en ce que** le revêtement (26) est appliqué par galvanisation, par galvanisation réalisée par immersion à chaud, ou bien est appliqué en utilisant un revêtement en poudre.

5. Raccord selon la revendication 1,
**caractérisé**
**en ce que** le revêtement (26) est formé par un matériau d'étanchéité organique.

6. Raccord selon l'une quelconque des revendications 1 à 5,
**caractérisé**
**en ce que** le revêtement (26) présente une épaisseur de couche se situant dans une plage comprise entre 4 µm et 7 µm.

7. Raccord selon l'une quelconque des revendications 1 à 6,
**caractérisé**
**en ce que** le corps de base (4) du raccord et/ou le manchon de serrage (6, 8) sont entièrement recouverts.

8. Raccord selon l'une quelconque des revendications 1 à 7,
**caractérisé**
**en ce que** le diamètre du manchon de serrage (6, 8), au moins dans la zone de sa surface de serrage (18), est conçu en étant diminué sur la longueur du manchon de serrage, ladite longueur étant mesurée dans la direction axiale, où le manchon de serrage (6, 8) présente un profil intérieur effilé, en particulier de manière conique, ronde ou bombée.

9. Raccord selon l'une quelconque des revendications 1 à 8,
**caractérisé**
**en ce que** le profil intérieur du manchon de serrage (6, 8) est formé de manière continue, en particulier de manière continuellement tangentielle ou bien de manière formant une courbure continue.

10. Système de tuyauterie
- comprenant au moins un raccord (2) selon l'une quelconque des revendications 1 à 9 et
- comprenant au moins un tuyau (14, 16) à assembler avec le raccord.

11. Système de tuyauterie selon la revendication 10, **caractérisé**
- **en ce que** le revêtement (26) est prévu sur la surface de serrage (22) associée au tuyau (14, 16),
- où le revêtement (26) est formé en se composant d'un matériau plus souple par comparaison avec le matériau des tuyaux.

12. Utilisation d'un raccord selon l'une quelconque des revendications 1 à 9 ou d'un système de tuyauterie selon l'une des revendications 10 ou 11, dans une installation de chauffage, de climatisation, d'équipement sanitaire ou d'eau potable, ou bien dans une installation pour le transport de fluides techniques ou médicaux.
